# EUROPEAN PATENT APPLICATION

(11) **EP 4 807 336 A1**
(43) Date of publication of application: **16.09.2026**
(21) Application number: 25163869.8
(22) Date of filing: 14.03.2025
(51) Int. Cl.: G01M 3/22, G01M 3/28, G01M 3/32, B01D 46/00

(54) **LEAK TESTING MODULE FOR LEAK TESTING OF A FLUID SYSTEM**

(71) Applicant: Sartorius Stedim Biotech GmbH, 37079 Göttingen (DE)
(72) Inventor: Stering, Magnus, 78600 Le Mesnil Le Roi (FR)
(74) Representative: Müller-Boré & Partner Patentanwälte PartG mbB

(57) **Abstract**

The application relates to a leak testing module for leak testing and/or integrity testing of a fluid system, in particular a single-use filter, a transfer set or a vessel, the leak testing module comprising: a measurement tube configured to be fluidly coupled with a test fluid inlet of the fluid system to be tested and to guide a test fluid to the fluid system to be tested through the test fluid inlet; a first multi-range pressure sensor provided at the measurement tube configured to measure fluid pressure at a first portion of the measurement tube.

## Description

The present disclosure relates to a leak testing module for leak testing of a fluid system, use of a respective leak testing module for leak testing of a fluid system and a method for leak testing of a fluid system.

Leak detection and/or integrity testing is an assessment of products capable of at least temporarily holding a fluid to ensure the products are free from any defects.

For example, at a pressure decay test, a vessel is filled with fluid until it reaches its target pressure, the fluid source is cut to isolate the pressure in the vessel and the decay (loss) of pressure in the vessel is measured over a set period of time. A detected pressure loss greater than a predetermined setting indicates a leak.

In addition or as an alternative, a fluid flow into the vessel may be measured, which allows determination of the volume of the vessel as well as improve leak detection and/or integrity testing. For this, a flow meter may be provided for measuring the fluid flow rate to determine the amount of fluid that is flowing into the vessel during testing.

However, since the test parameters for different products to be tested may differ significantly, testing modules previously known may either perform testing only for a certain type of product, only with low accuracy and/or only for a single parameter.

Some known testing modules therefore comprise several pressure sensors parallel to cover a larger pressure range and in order to provide accurate test results.

However, known testing modules have shortcomings and disadvantages including complex internal pneumatic circuits, need of external accessories and/or requirement of complicated and time-consuming calibration and adjustments.

Also, pressure sensors configured for measuring low pressure could be damaged if they are exposed to higher pressures, thereby limiting their range of use.

Moreover, up until today, a testing module that is capable of testing both flow rate and fluid pressure decay accurately, e.g., a flow of 0.1 mL/min up to 2,000 mL/min with an accuracy of +/- 3% for all flow rate values, and 1 mbar to 2000 mbar of pressure decay with an accuracy of +/- 0.1 %, is not known.

It is therefore an object of the present invention to provide a leak testing module configured to perform leak and/or integrity testing at a large range of testing parameters at high accuracy.

### Summary of the Invention

This object is solved according to the invention by the features of the independent claims. Additional embodiments of the invention are subject of the dependent claims.

One aspect relates to a leak testing module for leak testing and/or integrity testing of a fluid system, in particular a single-use filter, a transfer set or a vessel, the leak testing module comprising: a measurement tube configured to be fluidly coupled with a test fluid inlet of the fluid system to be tested and to guide a test fluid to the fluid system to be tested through the test fluid inlet; a first multi-range pressure sensor provided at the measurement tube configured to measure fluid pressure at a first portion of the measurement tube.

A corresponding leak testing module provides the advantage that it is configured for leak testing and/or integrity testing of a broad range of fluid systems. Different fluid systems require different testing characteristics, in particular with respect to fluid pressure and/or flow rate and/or fluid volume. The leak testing module comprising the first multi-range pressure sensor provides satisfactory test results with a broad range of fluid pressures. Accordingly, it is an advantageous multi-use leak testing module for measuring pressure decay of various fluid systems. In addition, the leak testing module avoids the need for cumbersome accessories that would require additional calibration and adjustment. Also, installation and the maintenance of the leak testing module is faster and cheaper so that the cost of installation and usage is reduced.

The fluid system to be tested may be suitable for holding and/or guiding a fluid. In particular, the fluid system may comprise or be a vessel, for example a bag or container, and/or a filter or a filter assembly, in particular comprising cross-flow filter or a tangential flow filter, and/or a flow connector kit or a filter transfer set. The fluid system may be single- or multi-use.

According to a particular example, the fluid system to be tested may be a single-use bag, a single use transfer set or a single-use filter assembly for a system for pharmaceutical use and/or microbial fermentation and/or cell cultivation.

The measurement tube may be configured for receiving a test fluid and for guiding said test fluid. It may be of different shape and/or size. For example, it may be a tubing or pipe having a substantially round diameter. The measurement tube may be configured so that one or more sensors may be attached and/or coupled to it for measuring parameters of the test fluid guided by the measurement tube.

The first multi-range pressure sensor of the leak testing module may be configured for measuring fluid pressure at low pressure of between approximately 50 mbar (5,000 Pa) and approximately 350 mbar (35,000 Pa) and/or at high pressure of between approximately 700 mbar (70,000 Pa) and approximately 5000 mbar (500,000 Pa).

Preferably, the first multi-range pressure sensor is configured to be used in a leak test of a single-use bag, which may be performed at approximately 50 mbar (5,000 Pa), and/or of a transfer set with or without a fluid filter, which may be performed at between approximately 1000 mbar (100,000 Pa) and approximately 2000 mbar (200,000 Pa), and/or of a filter capsule, which may be performed at between approximately 2500 mbar (250,000 Pa) and approximately 4500 mbar (450,000 Pa).

The first multi-range pressure sensor preferably comprises a fluid pressure measurement range of between approximately 3000 mbar (300,000 Pa) and approximately 5000 mbar (500,000 Pa) wherein a lower end of the measurement range is between approximately 10 mbar (1,000 Pa) and approximately 300 mbar (30,000 Pa) and/or wherein a higher end of the measurement range is between approximately 3000 mbar (300,000 Pa) and approximately 5000 mbar (500,000 Pa).

The first multi-range pressure sensor may be configured for measuring fluid pressure at between approximately 10 mbar (1,000 Pa) and approximately 300 mbar (30,000 Pa) with a resolution of between approximately 0.01 mbar (1 Pa) and approximately 1 mbar (100 Pa), in particular of approximately 0.1 mbar (10 Pa).

The first multi-range pressure sensor may be configured for measuring fluid pressure at between approximately 300 mbar (30,000 Pa) and approximately 1000 mbar (100,000 Pa) with a resolution of between approximately 0.1 mbar (10 Pa) and approximately 10 mbar (1000 Pa), in particular of approximately 1 mbar (100 Pa).

Alternatively or in addition, the first multi-range pressure sensor may be configured for measuring fluid pressure at between approximately 10 mbar (1,000 Pa) and approximately 300 mbar (30,000 Pa) with an accuracy of between approximately 0.05 % and approximately 1 %, in particular of approximately 0.1 %. The accuracy percentage may be relative to the measured pressure or relative to a predefined pressure value.

For example, the first multi-range pressure sensor may comprise an accuracy percentage of approximately 1 % relative to the measured pressure. Thus, the absolute accuracy value at 10 mbar (1,000 Pa) may be approximately 0.1 mbar (10 Pa) and the absolute accuracy value at 300 mbar (30,000 Pa) may be approximately 3 mbar (300 Pa).

As an alternative, the accuracy percentage may vary over a pressure range, wherein, preferably, the first multi-range pressure sensor comprises a lower accuracy percentage at lower pressures and a higher accuracy percentage at higher pressures. For example, the accuracy percentage at 10 mbar (1,000 Pa) may be approximately 0.1 %, which results in an absolute accuracy value of approximately 0.01 mbar (1 Pa), and the accuracy percentage at 300 mbar (30,000 Pa) may be approximately 1 %, which results in an absolute accuracy value of approximately 3 mbar (300 Pa).

Alternatively, the accuracy over a pressure range may be approximately 1 % at a pressure of 100 mbar (10,000 Pa), which corresponds to an absolute accuracy value of 1 mbar (100 Pa).

As another example, the first multi-range pressure sensor may be configured for measuring a fluid pressure of between approximately 50 mbar (5,000 Pa) and approximately 300 mbar (30,000 Pa) with an accuracy of approximately 0.05 % full scale (FS) and a fluid pressure of between approximately 1000 mbar (100,000 Pa) and approximately 2000 mbar (200,000 Pa) with an accuracy of approximately 0.1 % full scale (FS).

A respective multi-range pressure sensor is advantageously configured for leak and/or integrity testing of a broad range of fluid systems, which reduces the number of pressure sensors, thereby reducing complexity and costs of the leak testing module, and/or increases range of use of the leak testing module.

The leak testing module may further comprise a multi-range flow meter for measuring a fluid flow rate at a second portion of the measurement tube. A respective leak testing module additionally allows to measure the fluid flow and /or is suitable for measuring a volume and/or throughput characteristics of the fluid system to be tested.

The multi-range flow meter is preferably suitable for measuring a broad range of testing characteristics and/or testing parameters. The multi-range flow meter is advantageously configured to measure a fluid flow rate at low flow rate of between approximately 0.1 ml/min and approximately 10 ml/min and/or at high flow rate of between approximately 1 I/min and approximately 50 I/min.

Alternatively or in addition, multi-range flow meter is preferably suitable for measuring a fluid flow rate at between approximately 0.1 ml/min and approximately 10 ml/min with an accuracy of between approximately 0.05 % and approximately 1 %, in particular of approximately 0.1 %. The accuracy percentage may be relative to the measured fluid flow or relative to a predefined fluid flow value, similar as outlined above with respect to the first multi-range pressure sensor.

Preferably, the second portion of the measurement tube is upstream of the first portion of the measurement tube. In other words, the multi-range flow meter is advantageously positioned upstream of the first multi-range pressure sensor, respectively, the first multi-range pressure sensor is positioned downstream of the multi-range flow meter. A respective arrangement is advantageous for obtaining a more accurate measurement, in particular of the first multi-range pressure sensor.

The leak testing module may comprise the multi-range flow meter as the only and/or sole flow meter for measuring a fluid flow rate, in particular in the measurement tube. In particular, the leak testing module may not comprise two or more flow meters, e.g. provided parallel to one another.

The leak testing module may further comprise a second multi-range pressure sensor for measuring fluid pressure at a third portion of the measurement tube. This may increase the accuracy of the pressure measurement of the leak test.

Preferably, the third portion of the measurement tube is positioned upstream of the first portion and of the second portion of the measurement tube. In other words, the second multi-range pressure sensor is preferably positioned along the measurement tube upstream of the multi-range flow meter and of the first multi-range pressure sensor. Most preferably, the third portion is upstream of the second portion and the second portion is upstream of the first portion. Accordingly, the second multi-range pressure sensor is upstream of the multi-range flow sensor and the multi-range flow sensor is upstream of the first multi-range pressure sensor. A respective configuration may provide an improved measurement result because it allows compensation of the influence of the multi-range flow meter for example.

In particular, a first multi-range pressure sensor upstream and a second multi-range pressure sensor downstream of the multi-range flow meter may improve the filling algorithm and/or may offer verification of the functionality of the multi-range flow sensor.

Alternatively or in addition, respective first multi-range pressure and second multi-range pressure sensors may form a high range flow rate sensor by providing measurement data of the differential pressure generated by a flow restriction caused by the multi-range flow meter. Thus, the maximal measurable flow rate of a respective leak testing module may be beyond the upper limit of the multi-range flow meter.

The second multi-range pressure sensor preferably comprises a measurement range as stated above with respect to the first multi-range pressure sensor. In particular, the second multi-range pressure sensor is advantageously configured for leak and/or integrity testing of a broad range of fluid systems and at a broad range of fluid pressures as stated above with respect to the first multi-range pressure sensor.

The leak testing module may further comprise a measurement connector for fluidly coupling with a measurement coupling means of the fluid system to be tested, wherein the first multi-range pressure sensor is fluidly coupled with the measurement connector for measuring fluid pressure at the fluid system to be tested through the measurement coupling means.

A respective configuration may provide an improved measurement result because it allows compensation of the influence of the conduit between the first portion of the measurement tube and the fluid system to be tested, in particular of a coupling conduit fluidly coupling the measurement tube with the test fluid inlet of the fluid system.

In particular, a measurement conduit may fluidly couple the measurement connector of the leak testing module with the measurement coupling means.

As an alternative to the first multi-range pressure sensor, the second multi-range pressure sensor of the leak testing module may be fluidly coupled with the measurement connector for measuring fluid pressure at the fluid system.

The leak testing module may comprise a first pressure sensor valve provided between the first multi-range pressure sensor and the first portion of the measurement tube and further comprising a measurement connector valve provided between the first multi-range pressure sensor and the measurement connector. This is advantageous for selectively measuring fluid pressure at the first portion of the measurement tube and at the fluid system, specifically through the measurement coupling means.

Depending on the point for measurement, the first pressure sensor valve and the measurement connector valve may be selectively opened or closed for fluidly coupling the first multi-range pressure sensor with only one of the measurement tube or the fluid system to be tested.

The leak testing module may further comprise a fluid system multi-range pressure sensor; and a measurement connector for fluidly coupling the fluid system multi-range pressure sensor with a measurement coupling means of the fluid system to be tested; wherein the fluid system multi-range pressure sensor is fluidly coupled with the measurement connector for measuring fluid pressure at the fluid system to be tested through the measurement coupling means. This allows simultaneous and/or continuous measuring of fluid pressure at the measurement tube and the fluid system due to provision of differing pressure sensors.

The fluid system multi-range pressure sensor preferably comprises a measurement range as stated above with respect to the first multi-range pressure sensor. In particular, the fluid system multi-range pressure sensor is advantageously configured for leak and/or integrity testing of a broad range of fluid systems and at a broad range of fluid pressures as stated above with respect to the first multi-range pressure sensor.

The leak testing module may comprise a measurement connector valve provided between the fluid system multi-range pressure sensor and the measurement connector. Accordingly, opening of the measurement connector valve allows measuring of fluid pressure at the fluid system whereas closing of the measurement connector valve fluidly decouples the fluid system multi-range pressure sensor from the fluid system, thereby prohibiting the measurement.

The leak testing module may further comprise a proportional valve for regulating a fluid flow rate in the measurement tube provided upstream of the first portion of the measurement tube. This allows an advantageous regulation of the fluid flowing into and/or through the measurement tube and, consequently, into the fluid system. It may regulate filling speed and fluid pressure in the measurement tube.

Advantageously, the proportional valve may be controlled by a controller to allow a predetermined and/or predeterminable fluid flow. The controlling of the proportional valve may be based on one or more sensor signals.

The proportional valve is preferably positioned upstream of the second portion and/or the third portion of the measurement tube.

The leak testing module may further comprise a test fluid buffer reservoir fluidly coupled with the measurement tube and configured for receiving and/or holding a test fluid. This may reduce fluid pressure fluctuation and/or stabilizes pressure upstream of the multi-range pressure sensor(s) and/or of the multi-range flow meter, thereby allowing improved measurements. In particular, pressure stability may be improved and less pressure regulation by the proportional valve is required.

A fluid buffer reservoir may reduce pressure variations that may occur, e.g., if another device is connected to the same test fluid supply and works in parallel.

The fluid buffer reservoir may improve accuracy, in particular in unstable working conditions including test fluid supply pressure variations.

The test fluid buffer reservoir is preferably coupled with the measurement tube upstream of the first portion and/or the second portion and/or the third portion.

A buffer reservoir valve may be provided for selectively fluidly connecting the test fluid buffer reservoir with the measurement tube.

In particular, the test fluid buffer reservoir may compensate for limitations of the proportional valve.

The test fluid buffer reservoir may be configured to receive and/or hold between approximately 0.2 liter and 2 liters, in particular approximately 1 liter, of test fluid.

Alternatively or in addition to an integrated test fluid buffer, the leak testing module may comprise a test fluid buffer connector fluidly coupled with the measurement tube and configured to be fluidly coupled with an external test fluid buffer container.

If the leak testing module comprises a test fluid buffer reservoir and a test fluid buffer container, the test fluid buffer connector may be used for a fast and/or easy filling of the test fluid buffer reservoir.

The leak testing module may comprise an inlet valve for controlling of a fluid inlet into the leak testing module, in particular into the measurement tube.

The test fluid may be compressed gas, in particular comprising air and/or helium and/or nitrogen.

The leak testing module may comprise a depressurization valve fluidly coupled with the measurement tube and configured to depressurize the measurement tube. This allows a fast and/or easy depressurization. The depressurization valve is preferably coupled to the measurement tube downstream of the first portion of the measurement tube.

The leak testing module may comprise an outlet for fluidly coupling the measurement tube with the fluid system to be tested and/or a coupling conduit provided between the leak testing module and the fluid system to be tested.

The leak testing module may comprise at least one AD/DA converter for acquiring sensor and/or flow meter data and/or controlling the valves and/or sensors and/or the flow meter and/or other equipment.

The leak testing module may comprise a management unit and/or control unit for controlling the valves and/or sensors and/or the flow meter and/or other equipment.

The leak testing module may comprise a user interface for receiving input and providing output. The user interface may be a graphical user interface and/or a haptic user interface.

The leak testing module may comprise a memory for storing data and/or information. The leak testing module may be configured to establish a wired and/or wireless (network) connection with external devices.

The leak testing module may comprise a screen and/or display configured to show received testing data and/or monitoring measurement data. Alternatively or in addition, the leak testing module may be configured to send measurement data and/or test results to an external unit, for example, a laptop or handheld device.

A further aspect relates to a use of a leak testing module as described herein for leak testing and/or integrity testing of a fluid system.

A further aspect relates to a method for leak testing of a fluid system, in particular a single-use filter, a transfer set or a vessel, the method comprising: fluidly coupling a measurement tube of a leak testing module to a test fluid inlet of the fluid system to be tested; guiding a test fluid to the fluid system to be tested through the measurement tube and through the test fluid inlet; and measuring fluid pressure at a first portion of the measurement tube with a first multi-range pressure sensor of the leak testing module.

A respective method provides the advantage that it is configured for leak testing and/or integrity testing of a broad range of fluid systems and with a broad range of test parameters.

The method may further comprise the step of measuring a fluid flow rate in the measurement tube with a multi-range flow meter of the leak testing module, preferably at a second portion of the measurement tube upstream of the first portion. This allows testing of further parameters and/or obtaining an improved test result.

The method may further comprise the step of measuring fluid pressure at a third portion of the measurement tube with a second multi-range pressure sensor of the leak testing module, wherein the third portion is preferably upstream of the first portion and of the second portion of the measurement tube. This may increase the accuracy of the pressure measurement of the leak test.

The method may further comprise the step of fluidly coupling a measurement connector of the leak testing module to a measurement coupling means of the fluid system to be tested; and measuring fluid pressure at the fluid system to be tested through the measurement connector by the first multi-range pressure sensor or by a fluid system multi-range pressure sensor of the leak testing module.

Alternatively, fluid pressure at the fluid system to be tested may be measured by an external pressure sensor. This may be advantageous in particular if the measurement conduit fluidly coupling the leak testing module with the fluid system to be tested would be long, e.g., more than approximately 2 meters.

The method may further comprise the steps of providing a first pressure sensor valve between the first multi-range pressure sensor and the first portion of the measurement tube and providing a measurement connector valve between the first multi-range pressure sensor and the measurement connector. The method may further comprise selectively opening or closing the first pressure sensor valve and respectively closing or opening the measurement connector valve and measuring fluid pressure either at the measurement tube or at the fluid system to be tested.

This allows advantageously measuring fluid pressure at the measurement tube and at the fluid system to be tested selectively with the first multi-range pressure sensor, i.e., without provision of a further pressure sensor.

The method may further comprise the step of regulating a fluid flow speed in the measurement tube by controlling a proportional valve provided at an upstream and/or entrance portion of the measurement tube. The upstream and/or entrance portion is positioned upstream of the first portion of the measurement tube and, preferably, upstream of the second portion and the third portion of the measurement tube.

The present invention is further explained in detail by the following detailed description and the appended drawings, in which particular embodiments are illustrated by way of example, wherein the present invention is in no way limited by these particular embodiments. It should be understood that even though embodiments are separately described, single features thereof may be combined to additional embodiments.

### Brief description of the drawings

- Fig. 1: shows a first example of a leak testing module coupled to a fluid system;
- Fig. 2: shows a second example of a leak testing module coupled to a fluid system;
- Fig. 3: shows a third example of a leak testing module coupled to a fluid system;
- Fig. 4: shows a fourth example of a leak testing module coupled to a fluid system;
- Fig. 5: shows a fifth example of a leak testing module coupled to a fluid system.

### Description of particular embodiments

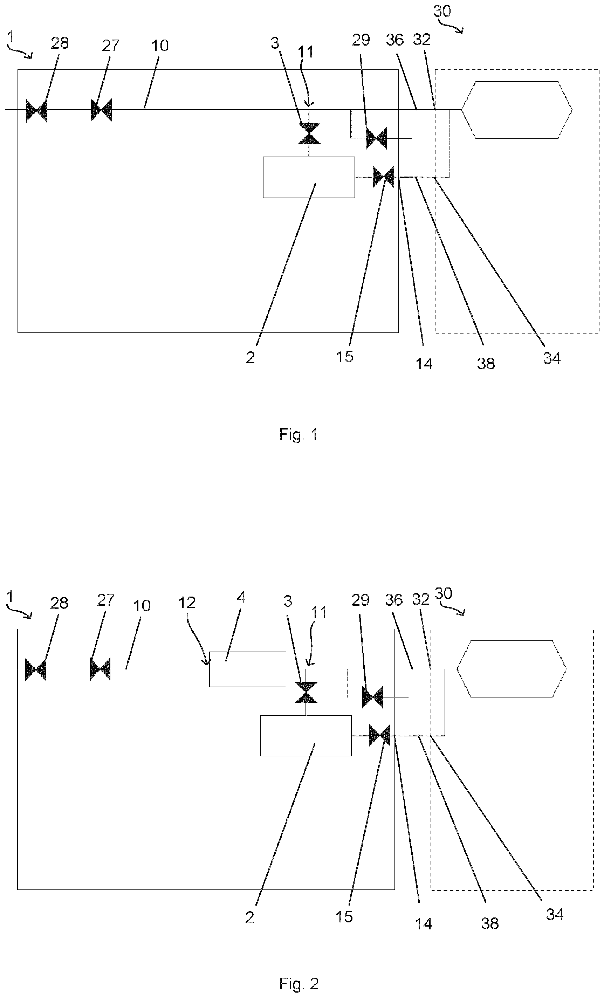

**Figure 1** shows a first example of a leak testing module 1 coupled to a fluid system 30.

The fluid system 30 may be a vessel, for example a bag or container, and/or a transfer set and/or a filter or a filter assembly or any container suitable for receiving and/or at least temporarily holding a fluid.

The fluid system 30 comprises a test fluid inlet 32 for receiving a test fluid. The test fluid inlet 32 may comprise a hose connector, a quick coupling or the like for being fluidly coupled with the leak testing module 1.

In the examples illustrated in the figures, a coupling conduit 36 is provided through which the test fluid may flow from the leak testing module 1 to the fluid system 30. However, in other examples, the leak testing module 1 may be coupled directly to the fluid system 30.

The leak testing module 1 comprises a measurement tube 10 through which test fluid may flow before flowing into the measurement system to be tested 30.

The leak testing module comprises an inlet valve 28 for selectively allowing or prohibiting test fluid flowing into the leak testing module 1, in particular, into the measurement tube 10.

The shown leak testing module 1 comprises a proportional valve 27 for regulating a flow rate of the test fluid within the measurement tube 10, in particular in the portions at which measurement means, i.e., pressure sensors and flow meter(s), are coupled.

In the first example, the measurement tube 10 comprises a first portion 11 at which a first multi-range pressure sensor 2 is coupled. The first multi-range pressure sensor 2 may be directly coupled to the first portion 11 or via a conduit as shown in figure 1.

The first multi-range pressure sensor 2 preferably comprises a measurement range as stated above. In particular, the first multi-range pressure sensor 2 is advantageously configured for leak and/or integrity testing of a broad range of fluid systems 30 and at a broad range of fluid pressures as stated above.

Optionally, a first pressure sensor valve 3 is provided for selectively coupling and decoupling the first multi-range pressure sensor 2 to, respectively from, the measurement tube 10.

In the shown example, the first multi-range pressure sensor 2 is coupled via a measurement connector 14 of the leak testing module 1 to the fluid system 30 and configured to measure fluid pressure of and/or within the fluid system 30.

The measurement connector 14 of the leak testing module 1 is coupled either directly or by means of a measurement conduit 38 (as shown in figure 1) to a measurement coupling means 38 of the fluid system to be tested 30.

Optionally, the leak testing module 1 comprises a measurement connector valve 15 for selectively coupling and decoupling the first multi-range pressure sensor 2 to, respectively from, the fluid system 30. Alternatively, a corresponding valve may be provided externally to the leak testing module 1.

The first multi-range pressure sensor 2 may comprise a single inlet or separate inlets for measuring fluid pressure in the measurement tube 10 and in the fluid system 30.

In case of a single inlet, the leak testing module 1 advantageously comprises a measurement connector valve 15 for selectively fluidly coupling the first multi-range pressure sensor 2 with the measurement coupling means 34 of the fluid system 30 and selectively fluidly decoupling the first multi-range pressure sensor 2 from the measurement coupling means 34 of the fluid system 30.

The first pressure sensor valve 3 and the measurement connector valve 15 may be controlled in an inverse manner so that the single inlet of the first multi-range pressure sensor 2 is either fluidly coupled with the measurement tube 10 through the first pressure sensor valve 3 or with the fluid system 30 through the measurement connector valve 15.

In case of separate inlets, the first pressure sensor valve 3 and/or the measurement connector valve 15 may be omitted. However, the valves may protect the pressure sensors from being subject to pressure above their suggested range of use.

Preferably, the leak testing module 1 does not comprise a bypass conduit for bypassing one or more of the measurement means, in particular a pressure sensor and/or a flow meter. In other words, the leak testing module is preferably configured such that test fluid flowing into the fluid system to be tested 30 flows through the portions of the measurement tube 10 at which pressure senor(s) and/or flow meter(s) are coupled and perform their measurements.

The leak testing module 1 comprises a depressurization valve 29 fluidly coupled with the measurement tube 10 for depressurizing the measurement tube 10. This allows a fast and/or easy depressurization of the measurement tube 10 and/or draining of the test fluid after the measurements and/or before decoupling from the fluid system 30. The depressurization valve 29 is coupled to the measurement tube 10 downstream of the first portion 11 of the measurement tube 10. However, it may be coupled to other portions of the measurement tube 10.

The leak testing module 1 may further comprise one or more of:
an AD/DA converter for acquiring data from one or more multi-range pressure sensors 2, 6 and/or the multi-range flow meter 4 and/or for controlling valves 3, 15, 27, 28 and/or sensors and/or other equipment;
a management unit and/or control unit for controlling the valves 3, 15, 27, 28 and/or sensors 2, 6 and/or the multi-range flow meter 4 and/or other equipment;
a user interface for receiving input from and providing output to an external device and/or a user. The user interface may be a graphical user interface and/or a haptic user interface;
a memory for storing data and/or information. The leak testing module may be configured to establish a wired and/or wireless (network) connection with external device(s);
a screen and/or display for showing received testing data and/or monitoring measurement data;
a communication means for sending measurement data and/or test results to an external unit and/or receiving instructions therefrom.

Alternatively or in addition, the leak testing module 1 may be configured to be connected to one or more devices having the above-stated features and/or functions.

**Figure 2** shows a second example of a leak testing module 1 coupled to a fluid system 30.

Further to the first example shown in figure 1, the second example comprises a multi-range flow meter 4 for measuring a flow rate of the test fluid within the measurement tube 10. The multi-range flow meter 4 is provided at a second portion 12 of the measurement tube 10, which is located upstream of the first portion 11, where the first multi-range pressure sensor 2 is coupled.

Alternatively, the multi-range flow meter 4 may be provided downstream of the first portion 11.

The multi-range flow meter 4 is configured to measure the flow of the fluid through the measurement tube 10.

The multi-range flow meter 4 preferably comprises a measurement range as stated above.

A leak testing module 1 according to the second example advantageously allows measuring the volume of the fluid system 30 and/or allows improved integrity/leak testing.

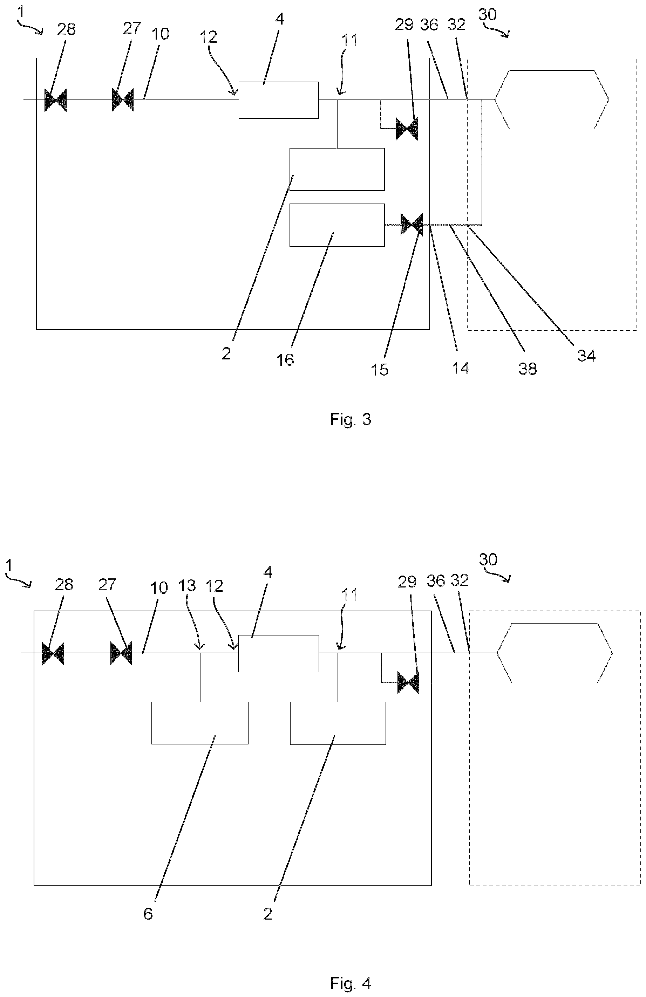

**Figure 3** shows a third example of a leak testing module 1 coupled to a fluid system 30. The shown example differs from the second example shown in figure 2 in that the leak testing module 1 comprises a fluid system multi-range pressure sensor 16 for measuring fluid pressure at the fluid system 30 instead of the first multi-range pressure sensor 2.

Specifically, the fluid system multi-range pressure sensor 16 is fluidly coupled with the measurement connector 14, which itself is fluidly coupled with the measurement coupling means 34 of the fluid system 30 by a measurement conduit 38.

The fluid system multi-range pressure sensor 16 preferably comprises a measurement range as stated above. In particular, fluid system multi-range pressure sensor 16 is advantageously configured for leak and/or integrity testing of a broad range of fluid systems 30 and at a broad range of fluid pressures as stated above.

Optionally, the leak testing module 1 may comprise a measurement connector valve 15 for selectively fluidly coupling the fluid system multi-range pressure sensor 16 with the measurement coupling means 34 of the fluid system 30 and selectively fluidly decoupling the fluid system multi-range pressure sensor 16 from the measurement coupling means 34 of the fluid system 30.

**Figure 4** shows a fourth example of a leak testing module 1 coupled to a fluid system 30.

The fourth example comprises a first multi-range pressure sensor 2 for measuring fluid pressure at a first portion 11 of the measurement tube 10 and a second multi-range pressure sensor 6 for measuring a fluid pressure at a third portion 13 of the measurement tube 10. The third portion 13 is positioned upstream of the first portion 11.

The second multi-range pressure sensor 6 preferably comprises a measurement range as stated above. In particular, the second multi-range pressure sensor 6 is advantageously configured for leak and/or integrity testing of a broad range of fluid systems 30 and at a broad range of fluid pressures as stated above.

Between the first portion 11 and the third portion 13, the leak testing module 1 comprises a multi-range flow meter 4 for measuring a flow rate at a second portion of the measurement tube 10.

A leak testing module 1 according to this example allows further improved measurements as the influence of the flow meter 4 may be compensated due to fluid pressure measurements upstream and downstream thereof.

The third portion 13 of the measurement tube 10 is preferably downstream of the proportional valve 27.

The fourth example may comprise a fluid system multi-range pressure sensor 16 for measuring fluid pressure at the fluid system 30 in correspondence with the third example or the first multi-range pressure sensor 2 may be configured for measuring fluid pressure at the fluid system 30 in correspondence with the first and second examples.

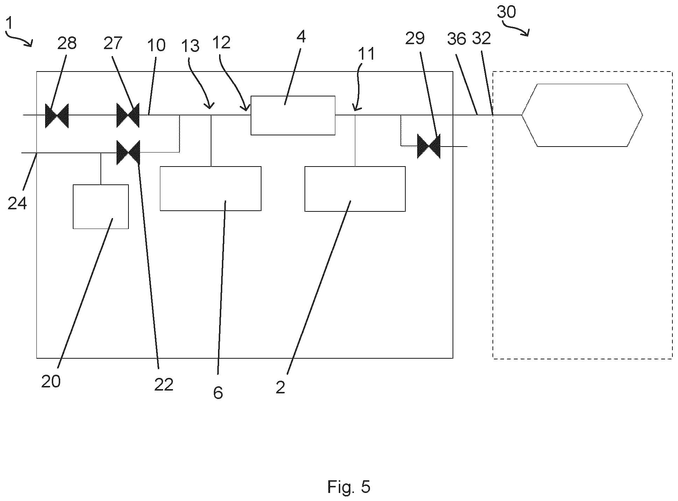

**Figure 5** shows a fifth example of a leak testing module 1 coupled to a fluid system 30.

Further to the fourth example shown in figure 4, the leak testing module 1 comprises a test fluid buffer reservoir 20 for holding a test fluid. The test fluid buffer reservoir 20 is preferably fluidly coupled to the measurement tube 10 upstream of the portions to which the multi-range pressure sensor(s) and the multi-range flow meter 4 is coupled to the measurement tube 10, i.e., first to third portions 11-13.

Preferably, a buffer reservoir valve 22 is provided for selectively fluidly coupling and decoupling the test fluid buffer reservoir 20 to, respectively, from the measurement tube 10.

The leak testing module 1 may, in addition or as an alternative to the test fluid buffer reservoir 20, comprise a test fluid buffer connector 24 fluidly coupled with the measurement tube 10 and/or, if provided, with the test fluid buffer reservoir 20.

The test fluid buffer connector 24 is configured to be fluidly coupled with an external test fluid reservoir and/or to receive test fluid. In particular, the internal test fluid buffer reservoir 20 may be filled with test fluid entering through the test fluid buffer connector 24 prior to the testing of the fluid system 30.

It is emphasized that features shown in one of the first to fifth examples illustrated in the figures may also be comprised by one of the other examples. For example, the fifth example shown in figure 5 may further be configured to measure fluid pressure at the fluid system to be tested 30, e.g., by comprising a measurement connector 14 for fluidly coupling with measurement coupling means of the fluid system to be tested 30 as the first example shown in figure 1. As another example, the first to fourth examples may further comprise a test fluid buffer reservoir 20 as the fifth example shown in figure 5.

### List of Reference Numerals

- 1: leak testing module
- 2: first multi-range pressure sensor
- 3: first pressure sensor valve
- 4: multi-range flow meter
- 6: second multi-range pressure sensor
- 10: measurement tube
- 11: first portion of measurement tube
- 12: second portion of measurement tube
- 13: third portion of measurement tube
- 14: measurement connector
- 15: measurement connector valve
- 16: fluid system multi-range pressure sensor
- 20: test fluid buffer reservoir
- 22: buffer reservoir valve
- 24: test fluid buffer connector
- 27: proportional valve
- 28: inlet valve
- 29: depressurization valve
- 30: fluid system (to be tested)
- 32: test fluid inlet
- 34: measurement coupling means
- 36: coupling conduit
- 38: measurement conduit

## Claims

1. Leak testing module (1) for leak testing of a fluid system (30), in particular a single-use filter, a transfer set or a vessel, the leak testing module (1) comprising:
a measurement tube (10) configured to be fluidly coupled with a test fluid inlet (32) of the fluid system to be tested (30) and to guide a test fluid to the fluid system to be tested (30) through the test fluid inlet (32);
a first multi-range pressure sensor (2) provided at the measurement tube (10) configured to measure fluid pressure at a first portion (11) of the measurement tube.

2. Leak testing module (1) of claim 1, wherein the first multi-range pressure sensor (2) is configured for measuring fluid pressure at low pressure of between approximately 100 mbar and approximately 350 mbar as well as at high pressure of between approximately 700 mbar and approximately 5000 mbar.

3. Leak testing module (1) of claim 1 or 2, further comprising a multi-range flow meter (4) for measuring a fluid flow rate at a second portion (12) of the measurement tube (10), preferably upstream of the first portion (11) of the measurement tube (10).

4. Leak testing module (1) of claim 3, wherein the multi-range flow meter (4) is the only/sole flow meter of the leak testing module (1) for measuring a fluid flow rate.

5. Leak testing module (1) of claim 3 or 4, further comprising a second multi-range pressure sensor (6) for measuring fluid pressure at a third portion (13) of the measurement tube (10), preferably upstream of the first portion (11) and of the second portion (12) of the measurement tube (10).

6. Leak testing module (1) of any one of the preceding claims, further comprising a measurement connector (14) for fluidly coupling with a measurement coupling means (34) of the fluid system to be tested (34), wherein the first multi-range pressure sensor (2) is fluidly coupled with the measurement connector (14) for measuring fluid pressure at the fluid system to be tested (30) through the measurement coupling means (34).

7. Leak testing module (1) of any one of claims 1 to 5, further comprising:
a fluid system multi-range pressure sensor (16); and
a measurement connector (14) for fluidly coupling the fluid system multi-range pressure sensor (16) with a measurement coupling means (34) of the fluid system to be tested (30);
wherein the fluid system multi-range pressure sensor (16) is fluidly coupled with the measurement connector (14) for measuring fluid pressure at the fluid system to be tested (30) through the measurement coupling means (34).

8. Leak testing module (1) of any one of the preceding claims, further comprising a proportional valve (27) for regulating a fluid flow rate in the measurement tube (10) provided upstream of the first portion (11) of the measurement tube (10).

9. Leak testing module (1) of any one of the preceding claims, further comprising:
a test fluid buffer reservoir (20) fluidly coupled with the measurement tube (10), preferably upstream of the first portion (11), and configured for receiving and/or holding a test fluid; and/or
a test fluid buffer connector (24) fluidly coupled with the measurement tube (10), preferably upstream of the first portion (11), and configured to be fluidly coupled with an external test fluid buffer container.

10. Use of the leak testing module (1) of any one of claims 1 to 9 for leak testing of a fluid system (30).

11. Method for leak testing of a fluid system, in particular a single-use filter, a transfer set or a vessel, the method comprising:
fluidly coupling a measurement tube (10) of a leak testing module (1) to a test fluid inlet (32) of the fluid system to be tested (30);
guiding a test fluid to the test fluid inlet (32) of the fluid system to be tested (30) through the measurement tube (10); and
measuring fluid pressure at a first portion (11) of the measurement tube (10) with a first multi-range pressure sensor (2) of the leak testing module (1).

12. Method of claim 11, further comprising the step:
measuring a fluid flow rate in the measurement tube (10) with a multi-range flow meter (4) of the leak testing module (1), preferably at a second portion (12) of the measurement tube (10) upstream of the first portion (11).

13. Method of claim 12, further comprising the step:
measuring fluid pressure at a third portion (13) of the measurement tube (10) with a second multi-range pressure sensor (6) of the leak testing module (1), wherein the third portion (13) is preferably upstream of the first portion (11) and of the second portion (12) of the measurement tube (10).

14. Method of any one of claims 11 to 13, further comprising the step:
fluidly coupling a measurement connector (14) of the leak testing module (1) to a measurement coupling means (34) of the fluid system to be tested (30); and
measuring fluid pressure at the fluid system to be tested (30) through the measurement connector (34) by the first multi-range pressure sensor (2) or a fluid system multi-range pressure sensor (16) of the leak testing module (1).

15. Method of any one of claims 11 to 14, further comprising the step:
regulating a fluid flow speed in the measurement tube (10) by controlling a proportional valve (27) provided upstream of the first portion (11) of the measurement tube (1).
